# EUROPEAN PATENT APPLICATION

(11) **EP 4 379 897 A2**
(43) Date of publication of application: **05.06.2024**
(21) Application number: 23212008.9
(22) Date of filing: 24.11.2023
(51) Int. Cl.: H01M 10/0587, H01M 4/58, H01M 10/04, H01M 10/0525

(54) **BATTERY CELL, BATTERY AND ELECTRIC DEVICE**

(30) Priority: 29.11.2022 CN 202211507915
(71) Applicant: REPT BATTERO Energy Co., Ltd., Wenzhou, Zhejiang 325024 (CN); Shanghai Ruipu Energy Co., Ltd., Shanghai 201206 (CN)
(72) Inventor: CAO, Hui, Zhejiang, 325024 (CN); CHEN, Dandan, Shanghai, 201206 (CN); HOU, Min, Shanghai, 201206 (CN); WANG, Xuxiang, Shanghai, 201206 (CN); LIU, Wei, Shanghai, 201206 (CN)
(74) Representative: Potter Clarkson

(57) **Abstract**

The present invention relates to a battery cell, a battery, and an electric device, and relates to the field of battery. The battery cell comprises a positive electrode plate, wherein the positive electrode plate comprises a positive electrode inner ring, a positive electrode current collector, and a positive electrode outer ring arranged sequentially from inside to outside; a negative electrode plate, wherein the negative electrode plate comprises a negative electrode inner ring, a negative electrode current collector, and a negative electrode outer ring arranged sequentially from inside to outside; and a separator, wherein the separator is located between the positive electrode plate and the negative electrode plate, and the positive electrode plate, the separator, and the negative electrode plate together form the battery cell; wherein, a surface density of the positive electrode inner ring is less than that of the positive electrode outer ring, and/or a surface density of the negative electrode inner ring is less than that of the negative electrode outer ring. The present invention can reduce the expansion rate of the negative electrode plate, making it difficult for the negative electrode inner ring to fracture and fail at the position with large curvature, thereby improving the service life of the wound battery during the (high rate) charging and discharging process.

## Description

### Technical Field

The present invention relates to the field of battery, in particular to a battery cell, a battery, and an electric device.

### Background Technology

After a long-term battery cycle (that is, charging and discharging), the existing lithium-ion battery is easy to cause a rapid increase in the amount of lithium intercalation in the negative electrode plate in a short time at the position where the curvature of the inner ring of the negative electrode is large. This will lead to a high expansion rate of the negative electrode plate, and then lead to the fracture and failure at the position with large curvature in the existing negative electrode inner ring, so it is necessary to improve the existing lithium-ion battery.

### Summary of the Invention

The present invention provides a battery cell, a battery, and an electric device to solve the problem of fracture and failure at positions with large curvature in the negative electrode inner ring in related technologies.

In the first aspect, the present invention provides a battery cell, which comprises: a positive electrode plate, wherein the positive electrode plate comprises a positive electrode inner ring, a positive electrode current collector, and a positive electrode outer ring arranged sequentially from inside to outside; a negative electrode plate, wherein the negative electrode plate comprises a negative electrode inner ring, a negative electrode current collector, and a negative electrode outer ring arranged sequentially from inside to outside; and a separator, wherein the separator is located between the positive electrode plate and the negative electrode plate; and the positive electrode plate, the separator, and the negative electrode plate together form the battery cell; wherein, a surface density of the positive electrode inner ring is less than that of the positive electrode outer ring, and/or a surface density of the negative electrode inner ring is less than that of the negative electrode outer ring; wherein, when the positive electrode outer ring and the negative electrode inner ring are facing each other, a ratio of an areic capacity of the negative electrode inner ring to an areic capacity of the positive electrode outer ring is between 1.1 to 1.5; when the positive electrode inner ring and the negative electrode outer ring are facing each other, a ratio of an areic capacity of the negative electrode outer ring to an areic capacity of the positive electrode inner ring is from 1.1 to 1.5. If the ratio of the areic capacity of the negative electrode inner ring to the areic capacity of the positive electrode outer ring is too high, or if the ratio of the areic capacity of the negative electrode outer ring to the areic capacity of the positive electrode inner ring is too high, the energy density of the battery will actually be reduced. In the present invention, "areic capacity" refers to a capacitance that can be released by the active material per unit area of the inner or outer ring of the electrode.

In some embodiments, when the positive electrode outer ring and the negative electrode inner ring are facing each other, the ratio of the areic capacity of the negative electrode inner ring to the areic capacity of the positive electrode outer ring is from 1.1 to 1.4, for example, from 1.1 to 1.3; when the positive electrode inner ring and the negative electrode outer ring are facing each other, the ratio of the areic capacity of the negative electrode outer ring to the areic capacity of the positive electrode inner ring is from 1.1 to 1.4, for example, from 1.1 to 1.3.

In some embodiments, when an active material of the positive electrode plate comprises a lithium iron phosphate material, and when the positive electrode outer ring and the negative electrode inner ring are facing each other, the ratio of the areic capacity of the negative electrode inner ring to the areic capacity of the positive electrode outer ring is from 1.1 to 1.4, for example, from 1.1 to 1.3.

In some embodiments, when an active material of the positive electrode plate comprises a lithium iron phosphate material, and when the positive electrode inner ring and the negative electrode outer ring are facing each other, the ratio of the areic capacity of the negative electrode outer ring to the areic capacity of the positive electrode inner ring is from 1.1 to 1.4, for example, from 1.1 to 1.3.

In some embodiments, when the positive electrode inner ring and the negative electrode outer ring are facing each other, the ratio of the areic capacity of the negative electrode outer ring to the areic capacity of the positive electrode inner ring is from 1.1 to 1.4, for example, from 1.1 to 1.3. If the ratio of the areic capacity of the negative electrode inner ring to the areic capacity of the positive electrode outer ring is too high, or if the ratio of the areic capacity of the negative electrode outer ring to the areic capacity of the positive electrode inner ring is too high, the energy density of the battery will actually be reduced.

In some embodiments, when an active material of the positive electrode plate comprises a ternary positive electrode material and an active material of the negative electrode plate comprises a silicon material, and when the positive electrode outer ring and the negative electrode inner ring are facing each other, the ratio of the areic capacity of the negative electrode inner ring to the areic capacity of the positive electrode outer ring is from 1.1 to 1.4, for example, from 1.1 to 1.3.

In some embodiments, when an active material of the positive electrode plate comprises a ternary positive electrode material and an active material of the negative electrode plate comprises a silicon material, and when the positive electrode inner ring and the negative electrode outer ring are facing each other, the ratio of the areic capacity of the negative electrode outer ring to the areic capacity of the positive electrode inner ring is from 1.1 to 1.4, for example, from 1.1 to 1.3.

In some embodiments, when the positive electrode inner ring and the negative electrode outer ring are facing each other, the ratio of the areic capacity of the negative electrode outer ring to the areic capacity of the positive electrode inner ring is from 1.1 to 1.4, for example, from 1.1 to 1.3. If the ratio of the areic capacity of the negative electrode inner ring to the areic capacity of the positive electrode outer ring is too high, or if the ratio of the areic capacity of the negative electrode outer ring to the areic capacity of the positive electrode inner ring is too high, the energy density of the battery will actually be reduced.

In some embodiments, a ratio of the surface density of the positive electrode outer ring to the surface density of the positive electrode inner ring is K₁=1+2πT/C₁;
wherein, T = thickness of the positive electrode plate + thickness of the negative electrode plate +2 * thickness of the separator; C₁ is a circumference of a central pin. A winding machine rolls a plate material into a cell by using a central pin, and the circumference of the central pin refers to an outer circumference of the central pin.

In some embodiments, a ratio of the surface density of the negative electrode outer ring to the surface density of the negative electrode inner ring is K₂=1+2πT/C₁;
wherein, T = thickness of the positive electrode plate + thickness of the negative electrode plate +2 * thickness of the separator; C₁ is a circumference of a central pin.

In the second aspect, the present invention also provides a battery, and the battery comprises the battery cell.

In the third aspect, the present invention also provides an electric device, and the electric device comprises the battery.

The examples of the present invention provide a battery cell, a battery, and an electric device, comprising a positive electrode plate, a negative electrode plate, and a separator. The present invention sets the surface density of the positive electrode inner ring to be less than the surface density of the positive electrode outer ring and/or sets the surface density of the negative electrode inner ring to be less than the surface density of the negative electrode outer ring, so that the present invention can effectively improve the excess ratio of the battery cell in lithium battery. As a result, at the position where the curvature of the negative electrode inner ring is large, it is difficult for the amount of lithium intercalation to increase rapidly in a short period of time. The expansion rate of the negative electrode plate is low, and the negative electrode inner ring is difficult to fracture and fail at the position with large curvature, thereby improving the service life of the wound battery during the (high rate) charging and discharging process.

### Brief Description of the Drawings

In order to explain the technical solutions in the examples of the present invention more clearly, the drawings used in the description of the examples will be briefly introduced below. Obviously, the drawings in the following description are only some examples of the present invention. Those of ordinary skill in the art may obtain other drawings based on these drawings without creative effort.

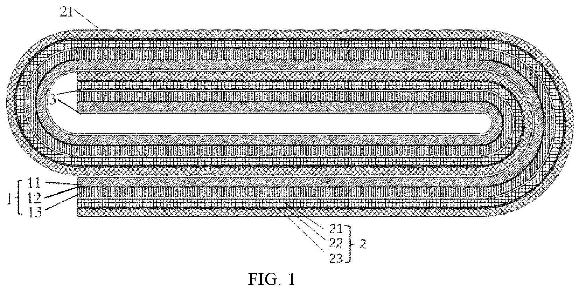

FIG. 1 is a structural schematic diagram of the battery cell provided in the examples of the present invention;
in FIG. 1: 1 represents a positive electrode plate; 11 represents a positive electrode inner ring; 12 represents a positive electrode current collector; 13 represents a positive electrode outer ring; 2 represents a negative electrode plate; 21 represents a negative electrode inner ring; 22 represents a negative electrode current collector; 23 represents a negative electrode outer ring; 3 represents a separator.

### Detailed Description

In order to make the purposes, technical solutions and advantages of the examples of the present invention clearer, the technical solutions of the examples of the present invention will be clearly and completely described below in conjunction with the drawings of the examples of the present invention. Obviously, the described examples are part of the examples of the present invention, but not all of the examples. Based on the examples of the present invention, all other examples obtained by those of ordinary skill in the art without creative work are within the scope of the present invention.

The positive electrode plate 1 and the negative electrode plate 2 in the present invention can be collectively referred to as positive and negative electrode plates. The negative electrode inner ring 21, the negative electrode outer ring 23, the positive electrode inner ring 11, and the positive electrode outer ring 13 are all layered structures formed by active substance coatings. The negative electrode inner ring 21 and the negative electrode outer ring 23 can be collectively referred to as negative electrode active substance coatings or negative electrode coatings. The positive electrode inner ring 11 and the positive electrode outer ring 13 can be collectively referred to as positive electrode active substance coatings or positive electrode coatings.

As shown in FIG. 1, in the positive electrode plate 1 of the present invention, the positive electrode current collector 12 is located between the positive electrode inner ring 11 and the positive electrode outer ring 13. The positive electrode plate 1 is wound after the positive electrode current collector 12 is coated with the active substance coatings. The positive electrode inner ring 11 refers to an active substance coating in the positive electrode plate 1 that is closer to the center of the battery cell. The positive electrode outer ring 13 refers to an active substance coating in the positive electrode plate 1 that is closer to the periphery of the battery cell. Similarly, the negative electrode current collector 22 is located between the negative electrode inner ring 21 and the negative electrode outer ring 23. The negative electrode inner ring 21 refers to an active substance coating in the negative electrode plate 2 that is closer to the center of the battery cell. The negative electrode outer ring 23 refers to an active substance coating in the negative electrode plate 2 that is closer to the periphery of the battery cell.

On the one hand, the examples of the present invention provide a battery cell, a battery, and an electric device, which can solve the problems that the positive and negative electrode plates are prone to fracture and the battery is prone to lithium precipitation in the related technology. It should be noted that if there are substantially the same results, the battery cell, the battery, and the electric device of the present invention are not limited to the technical solutions introduced below.

In actual operation, the battery cell includes: a positive electrode plate 1, wherein the positive electrode plate 1 comprises a positive electrode inner ring 11, a positive electrode current collector 12, and a positive electrode outer ring 13 arranged sequentially from inside to outside; a negative electrode plate 2, wherein the negative electrode plate 2 comprises a negative electrode inner ring 21, a negative electrode current collector 22, and a negative electrode outer ring 23 arranged sequentially from inside to outside; and a separator 3, wherein the separator 3 is located between the positive electrode plate 1 and the negative electrode plate 2; and the positive electrode plate 1, the separator 3, and the negative electrode plate 2 together form the battery cell; wherein, a surface density of the positive electrode inner ring 11 is less than that of the positive electrode outer ring 13, and/or a surface density of the negative electrode inner ring 21 is less than that of the negative electrode outer ring 23.

In the above technical solution, when the surface density of the positive electrode inner ring 11 is less than that of the positive electrode outer ring 13, and/or the surface density of the negative electrode inner ring 21 is less than that of the negative electrode outer ring 23, the amount of lithium intercalation of the negative electrode plate 2 of the battery cell of the present invention is difficult to rapidly increase in a short period of time. As a result, during the long-term charging and discharging process, the thickness expansion rate of the electrode plate of a lithium battery comprising the battery cell is small. The lithium battery is difficult to fracture and fail during long-term cycling.

It should be noted that in the present invention, the positive electrode plate 1, the separator 3, and the negative electrode plate 2 together form the battery cell, in a case where the positive electrode plate 1 has positive electrode coatings and the negative electrode plate 2 has negative electrode coatings. Therefore, when the surface density of the positive electrode inner ring 11 is less than that of the positive electrode outer ring 13, and/or the surface density of the negative electrode inner ring 21 is less than that of the negative electrode outer ring 23, the amount of lithium intercalation of the negative electrode plate 2 of the battery cell of the present invention is difficult to rapidly increase in a short period of time. As a result, during the long-term charging and discharging process, the thickness expansion rate of the electrode plate of a lithium battery comprising the battery cell is small. The lithium battery is difficult to fracture and fail during long-term cycling.

Furthermore, when the positive electrode outer ring 13 and the negative electrode inner ring 21 are facing each other, the ratio of the areic capacity of the negative electrode inner ring 21 to the areic capacity of the positive electrode outer ring 13 is from 1.1 to 1.5; and when the positive electrode inner ring 11 and negative electrode outer ring 23 are facing each other, the ratio of the areic capacity of the negative electrode outer ring 23 to the areic capacity of the positive electrode inner ring 11 is from 1.1 to 1.5. When the values meet the above ranges, the degree of lithium intercalation in the negative electrode is appropriate. The negative electrode neither experiences shallow charging and discharging, resulting in insufficient capacity utilization, nor is it prone to lithium precipitation, making the electrode safer and improving its service life. After battery cycling, the electrode plate is not prone to lithium precipitation or fracture. When the ratio of the areic capacity of the negative electrode inner ring 21 to the areic capacity of the positive electrode outer ring 13 and/or the ratio of the areic capacity of the negative electrode outer ring 23 to the areic capacity of the positive electrode inner ring 11 is less than 1.1, the electrode plate is prone to lithium precipitation and fracture after battery cycling.

Furthermore, when the active material of the positive electrode plate comprises a lithium iron phosphate material, and when the positive electrode outer ring 13 and the negative electrode inner ring 21 are facing each other, the ratio of the areic capacity of the negative electrode inner ring 21 to the areic capacity of the positive electrode outer ring 13 is from 1.1 to 1.4, for example, from 1.1 to 1.3; and when the positive electrode inner ring 11 and the negative electrode outer ring 23 are facing each other, the ratio of the areic capacity of the negative electrode outer ring 23 to the areic capacity of the positive electrode inner ring 11 is from 1.1 to 1.4, for example, from 1.1 to 1.3. When the values meet the above ranges, the degree of lithium intercalation in the negative electrode is appropriate. The negative electrode neither experiences shallow charging and discharging, resulting in insufficient capacity utilization, nor is it prone to lithium precipitation, making the electrode safer and improving its service life.

Furthermore, when the active material of the positive electrode plate comprises a ternary positive electrode material and the active material of the negative electrode plate comprises a silicon material, and when the positive electrode outer ring 13 and the negative electrode inner ring 21 are facing each other, the ratio of the areic capacity of the negative electrode inner ring 21 to the areic capacity of the positive electrode outer ring 13 is from 1.1 to 1.4, for example, from 1.1 to 1.3; and when the positive electrode inner ring 11 and the negative electrode outer ring 23 are facing each other, the ratio of the areic capacity of the negative electrode outer ring 23 to the areic capacity of the positive electrode inner ring 11 is from 1.1 to 1.4, for example, from 1.1 to 1.3. When the values meet the above ranges, the degree of lithium intercalation in the silicon negative electrode material is appropriate. The silicon negative electrode neither lacks lithium intercalation, resulting in insufficient capacity utilization, nor is it prone to over intercalation, resulting in lithium precipitation, making it safer and improving its service life.

Furthermore, the ratio of the surface density of the positive electrode outer ring 13 to the surface density of the positive electrode inner ring 11 is K₁=1+2πT/C₁;
wherein, T is thickness of the positive electrode plate + thickness of the negative electrode plate +2 * thickness of the separator; C₁ is the circumference of the central pin.

Furthermore, the ratio of the surface density of the negative electrode outer ring 23 to the surface density of the negative electrode inner ring 21 is K₂=1+2πT/C₁; wherein, T is thickness of the positive electrode plate + thickness of the negative electrode plate +2 * thickness of the separator; C₁ is the circumference of the central pin.

When the above formulas are satisfied, the excess ratio of the negative electrode outer ring to the positive electrode inner ring will not be affected by the difference in coating area caused by the winding structure (after winding, the coating area of the positive electrode inner ring is larger than that of the negative electrode outer ring), so that the excess ratio of the negative electrode outer ring to the positive electrode inner ring and the excess ratio of the negative electrode inner ring to the positive electrode outer ring are controlled within a reasonable range, and the electrode plate is not prone to fracture or lithium precipitation after battery cycling. When the values of K₁ and K₂ are relatively large, the electrode plate is easy to fracture after battery cycling. When the values of K₁ and K₂ are relatively small, the electrode plate is easy to lithium precipitation after battery cycling. In the present invention, "excess ratio of the negative electrode outer ring to the positive electrode inner ring" refers to a ratio of the areic capacity of the negative electrode outer ring to the areic capacity of the positive electrode inner ring, and "excess ratio of the negative electrode inner ring to the positive electrode outer ring" refers to a ratio of the areic capacity of the negative electrode inner ring to the areic capacity of the positive electrode outer ring.

In the second aspect, the present application provides a battery comprising the aforementioned battery cell.

In some embodiments, the battery is a lithium-ion battery, such as an iron lithium battery (i.e. lithium iron phosphate battery) or a ternary lithium battery (i.e. ternary positive electrode material lithium-ion battery). In the present invention, "lithium battery" refers to a lithium-ion battery.

In the third aspect, the present application also provides an electric device comprising the aforementioned battery.

In order to better illustrate that the present invention has a good effect in preventing the negative electrode plate 2 from fracture and preventing the battery from lithium precipitation, multiple sets of tests were conducted on iron lithium battery and ternary lithium battery respectively.

The following Examples 1-7 are related to lithium iron phosphate battery, and Examples 8-14 are related to ternary lithium battery. In addition, materials or methods not specified in each example are conventional choices. In Tables 1 and 2, a1 is the ratio of the areic capacity of the negative electrode inner ring 21 to the areic capacity of the positive electrode outer ring 13 when the positive electrode outer ring 13 and the negative electrode inner ring 21 are facing each other, and a2 is the ratio of the areic capacity of the negative electrode outer ring 23 to the areic capacity of the positive electrode inner ring 11 when the positive electrode inner ring 11 and the negative electrode outer ring 23 are facing each other.

In Examples 1-14, the positive electrode current collector of the positive electrode plate was aluminum foil (with a thickness of 13µm), and the components of the positive electrode inner ring 11 and the positive electrode outer ring 13 were a positive electrode active material, conductive carbon black as a conductive agent, and poly(vinylidene fluoride) (PVDF) as a binder in a mass ratio of 97:1:2.

In Examples 1-14, the negative electrode current collector of the negative electrode plate was copper foil (with a thickness of 6µm), and the components of the negative electrode inner ring 21 and the negative electrode outer ring 23 were a negative electrode active material, conductive carbon black as a conductive agent, carboxymethyl cellulose sodium as a binder, and styrene-butadiene rubber as a binder in a mass ratio of 96: 0.8: 1.2: 2.

In Examples 1-14, the material of the separator was PE film coated with ceramic coatings and PVDF coatings.

In Examples 1-14, the lithium salt of the electrolyte is lithium hexafluorophosphate with a concentration of 1mol/L, the solvent is ethylene carbonate, dimethyl carbonate and diethyl carbonate in a mass ratio of 1:1:1, and the additive is vinylene carbonate with a mass fraction of 2% of the electrolyte.

The production process of lithium-ion batteries in Examples 1-14 includes the following steps:
preparation of slurry: mixing a solvent, a binder, a positive electrode active material, and a conductive agent, and stirring them evenly at a high speed to prepare a pulpy positive electrode slurry; mixing a solvent, a binder, a negative electrode active material, and a conductive agent, and stirring them evenly at a high speed to prepare a pulpy negative electrode slurry;
coating: coating the prepared slurry evenly on the surface of the current collector, drying, rolling and slitting to respectively prepare a positive electrode plate and a negative electrode plate;
assembly: placing the positive electrode plate, the separator, the negative electrode plate and the separator in sequence, winding them to form a battery cell, injecting electrolyte, sealing and carrying out other steps to complete the assembling process of a battery, and obtaining a finished battery;
formation and grading: carrying out charge and discharge test on the finished battery.

In the present invention, the testing method for surface density is: taking a 1cm * 1cm sized electrode plate; when measuring the outer ring, wiping off the dressing of the inner ring with solvent, weighing the electrode plate after drying, subtracting the weight of the current collector, and then dividing the weight by the area to calculate the surface density; and in the same way, when measuring the inner ring, wiping off the dressing of the outer ring with solvent, weighing the electrode plate after drying, subtracting the weight of the current collector, and then dividing the weight by the area to calculate the surface density.

In the present invention, capacity = surface density of the coating * mass fraction of the active material in the coating * gram capacity of the active material * area of the electrode coating.

In the present invention, the thickness of the electrode refers to the thickness of the electrode after rolling.

### Example 1

Battery was made according to conventional processes, wherein: the positive electrode active material was lithium iron phosphate material, and the thickness of the positive electrode plate was 185µm; the negative electrode active material was artificial graphite, and the thickness of the negative electrode plate: 147µm; the thickness of the separator: 15µm; the circumference of central pin: 50mm.

### Example 2

Battery was made according to conventional processes, wherein: the positive electrode active material was lithium iron phosphate material, and the thickness of the positive electrode plate was 177µm; the negative electrode active material was artificial graphite, and the thickness of the negative electrode plate: 128µm; the thickness of the separator: 15µm; the circumference of central pin: 50mm.

### Example 3

Battery was made according to conventional processes, wherein: the positive electrode active material was lithium iron phosphate material, and the thickness of the positive electrode plate was 226µm; the negative electrode active material was artificial graphite, and the thickness of the negative electrode plate: 183µm; the thickness of the separator: 15µm; the circumference of central pin: 50mm.

### Example 4

Battery was made according to conventional processes, wherein: the positive electrode active material was lithium iron phosphate material, and the thickness of the positive electrode plate was 202µm; the negative electrode active material was natural graphite, and the thickness of the negative electrode plate: 134µm; the thickness of the separator: 15µm; the circumference of central pin: 50mm.

### Example 5

Battery was made according to conventional processes, wherein: the positive electrode active material was lithium iron phosphate material, and the thickness of the positive electrode plate was 189µm; the negative electrode active material was artificial graphite, and the thickness of the negative electrode plate: 179µm; the thickness of the separator: 15µm; the circumference of central pin: 50mm.

### Example 6

Battery was made according to conventional processes, wherein: the positive electrode active material was lithium iron phosphate material, and the thickness of the positive electrode plate was 148µm; the negative electrode active material was artificial graphite, and the thickness of the negative electrode plate: 141µm; the thickness of the separator: 15µm; the circumference of central pin: 50mm.

### Example 7

Battery was made according to conventional processes, wherein: the positive electrode active material was lithium iron phosphate material, and the thickness of the positive electrode plate was 193 µm; the negative electrode active material was artificial graphite, and the thickness of the negative electrode plate: 141µm; the thickness of the separator: 15µm; the circumference of central pin: 50mm.

### Example 8

Battery was made according to conventional processes, wherein: the positive electrode active material was 5-series ternary material (LiNi_{0.5}Co_{0.2}Mn_{0.3}O₂), and the thickness of the positive electrode plate was 148µm; the negative electrode active material was artificial graphite, and the thickness of the negative electrode plate: 198µm; the thickness of the separator: 15µm; the circumference of central pin: 50mm.

### Example 9

Battery was made according to conventional processes, wherein: the positive electrode active material was 5-series ternary material (LiNi_{0.5}Co_{0.2}Mn_{0.3}O₂), and the thickness of the positive electrode plate was 142µm; the negative electrode active material was artificial graphite; the thickness of the negative electrode plate: 179µm; the thickness of the separator: 15µm; the circumference of central pin: 50mm.

### Example 10

Battery was made according to conventional processes, wherein: the positive electrode active material was 5-series ternary material (LiNi_{0.5}Co_{0.2}Mn_{0.3}O₂), and the thickness of the positive electrode plate was 159µm; the negative electrode active material was natural graphite; the thickness of the negative electrode plate: 185µm; the thickness of the separator: 15µm; the circumference of central pin: 50mm.

### Example 11

Battery was made according to conventional processes, wherein: the positive electrode active material was 5-series ternary material (LiNi_{0.5}Co_{0.2}Mn_{0.3}O₂), and the thickness of the positive electrode plate was 142µm; the negative electrode active material was artificial graphite; the thickness of the negative electrode plate: 230µm; the thickness of the separator: 15µm; the circumference of central pin: 50mm.

### Example 12

Battery was made according to conventional processes, wherein: the positive electrode active material was 5-series ternary material (LiNi_{0.5}Co_{0.2}Mn_{0.3}O₂), and the thickness of the positive electrode plate was 160µm; the negative electrode active material was artificial graphite; the thickness of the negative electrode plate: 262µm; the thickness of the separator: 15µm; the circumference of central pin: 50mm.

### Example 13

Battery was made according to conventional processes, wherein: the positive electrode active material was 8-series ternary material (LiNi_{0.8}Co_{0.1}Mn_{0.1}O₂), and the thickness of the positive electrode plate was 159µm; the negative electrode active material was 90wt% graphite+10wt% silicon oxide, and the thickness of the negative electrode plate: 185µm; the thickness of the separator: 15µm; the circumference of central pin: 50mm.

### Example 14

Battery was made according to conventional processes, wherein: the positive electrode active material was 8-series ternary material (LiNi_{0.8}Co_{0.1}Mn_{0.1}O₂), and the thickness of the positive electrode plate was 136µm; the negative electrode active material was 90wt% graphite+10wt% silicon oxide, and the thickness of the negative electrode plate: 198µm; the thickness of the separator: 15µm; the circumference of central pin: 50mm.

The batteries of examples 1-14 were subjected to cycle test to observe the fracture condition and interface after cycling, and the results are shown in Table 1 and Table 2.

**Table 1: Lithium iron phosphate battery**

| Example | Measured value of surface density ratio | | a1 | a2 | Cycle number | Fracture condition | Interface |
|---|---|---|---|---|---|---|---|
| | positive electrode outer ring 13/ positive electrode inner ring 11 | negative electrode outer ring 23/ negative electrode inner ring 21 | | | | | |
| 1 | 1.05 | 1.05 | 1.2 | 1.4 | 500 | Non-fracture | Non-lithium precipitation |
| 2 | 1.05 | 1.05 | 1.1 | 1.2 | 500 | Slight fracture | Non-lithium precipitation |
| 3 | 1.05 | 1.05 | 1.3 | 1.4 | 500 | Non-fracture | Slight lithium precipitation |
| 4 | 1.05 | 1.05 | 1.0 | 1.1 | 500 | Slight fracture | Slight lithium precipitation |
| 5 | 1.05 | 1.05 | 1.5 | 1.6 | 500 | Slight fracture | Slight lithium precipitation |
| 6 | 1.05 | 1.05 | 1.5 | 1.7 | 500 | Fracture | Lithium precipitation |
| 7 | 1.05 | 1.05 | 1.1 | 1.2 | 500 | Non-fracture | Non-lithium precipitation |

**Table 2: Ternary lithium battery**

| Example | Measured value of surface density ratio | | a1 | a2 | Cycle number | Fracture condition | Interface |
|---|---|---|---|---|---|---|---|
| | positive electrode outer ring 13/positive electrode inner ring 11 | negative electrode outer ring 23/negative electrode inner ring 21 | | | | | |
| 8 | 1.05 | 1.05 | 1.2 | 1.3 | 500 | Non-fracture | Non-lithium precipitation |
| 9 | 1.05 | 1.05 | 1.1 | 1.3 | 500 | Slight fracture | Non-lithium precipitation |
| 10 | 1.05 | 1.05 | 1.0 | 1.1 | 500 | Slight fracture | Slight lithium precipitation |
| 11 | 1.05 | 1.05 | 1.5 | 1.6 | 500 | Slight fracture | Slight lithium precipitation |
| 12 | 1.05 | 1.05 | 1.5 | 1.6 | 500 | Fracture | Lithium precipitation |
| 13 | 1.05 | 1.05 | 1.2 | 1.3 | 500 | Non-fracture | Non-lithium precipitation |
| 14 | 1.05 | 1.05 | 1.5 | 1.7 | 500 | Non-fracture | Non-lithium precipitation |

Cycle test: the batteries prepared in Examples 1-14 were respectively subjected to cycle test: the batteries were charged to 4.25V at a constant current and voltage of 1C, with a cut-off current of 0.05C, and left unused for one hour; then the batteries were discharged at a constant current of 1C to 2.8V and left unused for another hour; taking this as a cycle and conducting a total of 500 cycles; after completing 500 cycles, the batteries were disassembled, and the fracture and lithium precipitation of the negative electrode plate were shown in Table 1 and Table 2.

In Table 1 and Table 2, "slight fracture" refers to incomplete fracture at the corners of the electrode plate; "fracture" refers to complete fracture at the corner of the electrode plate; "slight lithium precipitation" refers to the area of the lithium precipitation part on the coating where lithium precipitation occurs is ≤5% of the total coating area; "lithium precipitation" refers to the area of the lithium precipitation part on the coating where lithium precipitation occurs is > 5% of the total coating area.

It can be seen from Table 1 and Table 2:
Compared with Example 1, in Example 2, since the ratio of the surface density of the positive electrode outer ring to the surface density of the positive electrode inner ring is too large and fails to satisfy K₁ = 1 + 2πT/(C₁, and the ratio of the surface density of the negative electrode outer ring to the surface density of the negative electrode inner ring is too large and fails to satisfy K₂ = 1 + 2πT/(C₁, the electrode plate of the battery prepared in Example 2 generated slight fracture after cycling.

Compared with Example 1, in Example 3, since the ratio of the surface density of the positive electrode outer ring to the surface density of the positive electrode inner ring is too small and fails to satisfy K₁ = 1 + 2πT/(C₁, and the ratio of the surface density of the negative electrode outer ring to the surface density of the negative electrode inner ring is too small and fails to satisfy K₂ = 1 + 2πT/(C₁, the electrode plate of the battery prepared in Example 3 generated slight lithium precipitation after cycling.

Compared with Example 1, in Example 4, since the value of a1 fails to meet the requirement of from 1.1 to 1.5, the electrode plate of the battery prepared in Example 4 generated slight lithium precipitation and slight fracture after cycling.

Compared with Example 1, in Example 5, since the value of a2 fails to meet the requirement of from 1.1 to 1.5, the electrode plate of the battery prepared in Example 5 generated slight lithium precipitation and slight fracture after cycling.

Compared with Example 1, in Example 6, since the surface density ratios are too large and fail to satisfy K₁ = 1 + 2πT/(C₁ and K₂=1+2πT/C₁, and the value of a2 fails to meet the requirement of from 1.1 to 1.5, the electrode plate of the battery prepared in Example 6 generated lithium precipitation and fracture after cycling.

The active material of the negative electrode plates of Example 14 and Example 13 comprises silicon material. When the active material of the negative electrode plate comprises silicon material, the values of a1 and a2 in Example 13 both satisfy from 1.1 to 1.3, so that the electrode plate of the battery prepared in Example 13 did not generate lithium precipitation and fracture after cycling, and had high energy density. When the active material of the negative electrode plate comprises silicon material, the values of a1 and a2 in Example 14 fails to meet the requirement of from 1.1 to 1.3, especially fails to meet the requirement of from 1.1 to 1.4, specifically, the values of a1 and a2 in Example 14 are greater than 1.3, especially greater than 1.4, although the battery prepared in Example 14 will not generate lithium precipitation and fracture, the silicon-containing negative electrode had insufficient lithium intercalation and low capacity, resulting in a decrease in energy density. Energy density=capacity * platform voltage/mass. As the values of a1 and a2 increase, the capacity decreases and the energy density decreases.

In the description of the present invention, it should be noted that, orientational or positional relationships indicated by the terms "upper", "lower" and the like are the orientational or positional relationships shown based on the drawings, and are only for ease of describing the present invention and simplifying the description, rather than indicating or implying that the apparatus or element referred to must have a specific orientation or be constructed and operated in a specific orientation, and therefore cannot be construed as limiting the present invention. Unless otherwise specified and defined, the term "install", "connected", and "connect" should be comprehended in a broad sense. For example, connection may be a fixed connection, a detachable connection or an integrated connection; or may be a mechanical connection or an electrical connection; or may be a direct connection or an indirect connection via an intermediate medium; or may be internal communication between two elements. For those of ordinary skill in the art, specific meanings of the foregoing terms in the present disclosure may be understood based on specific situations.

It should be noted that in the present invention, relational terms such as "first" and "second" and the like are only used to distinguish one entity or operation from another entity or operation, and do not necessarily require or imply any such actual relationship or order between these entities or operations. Moreover, the terms "comprise", "comprising" or any other variation thereof, are intended to cover a non-exclusive inclusion, such that a process, method, article, or device that comprises a series of elements not only comprises those elements, but also other elements that are not explicitly listed, or also comprises elements inherent in such process, method, article, or device. Without further limitations, the elements limited by the statement "comprising a..." do not exclude the existence of other identical elements in the process, method, article, or device that comprises the said elements.

The above are only specific embodiments of the present invention, enabling those skilled in the art to understand or implement the present invention. The various modifications to these embodiments will be apparent to those skilled in the art, and the general principles defined in this article can be implemented in other embodiments without departing from the spirit or scope of the present invention. Therefore, the present invention will not be limited to the embodiments shown in this article, but will conform to the widest range consistent with the principles and novel features of the present invention.

## Claims

1. A battery cell, wherein the battery cell comprises:
a positive electrode plate (1), wherein the positive electrode plate (1) comprises a positive electrode inner ring (11), a positive electrode current collector (12), and a positive electrode outer ring (13) arranged sequentially from inside to outside;
a negative electrode plate (2), wherein the negative electrode plate (2) comprises a negative electrode inner ring (21), a negative electrode current collector (22), and a negative electrode outer ring (23) arranged sequentially from inside to outside;
a separator (3), wherein the separator (3) is located between the positive electrode plate (1) and the negative electrode plate (2), and the positive electrode plate (1), the separator (3), and the negative electrode plate (2) are wound together to form the battery cell;
wherein, a surface density of the positive electrode inner ring (11) is less than that of the positive electrode outer ring (13), and/or a surface density of the negative electrode inner ring (21) is less than that of the negative electrode outer ring (23);
wherein, when the positive electrode outer ring (13) and the negative electrode inner ring (21) are facing each other, a ratio of an areic capacity of the negative electrode inner ring (21) to an areic capacity of the positive electrode outer ring (13) is from 1.1 to 1.5; and when the positive electrode inner ring (11) and the negative electrode outer ring (23) are facing each other, a ratio of an areic capacity of the negative electrode outer ring (23) to an areic capacity of the positive electrode inner ring (11) is from 1.1 to 1.5.

2. The battery cell of claim 1, wherein when an active material of the positive electrode plate comprises a lithium iron phosphate material, and when the positive electrode outer ring (13) and the negative electrode inner ring (21) are facing each other, the ratio of the areic capacity of the negative electrode inner ring (21) to the areic capacity of the positive electrode outer ring (13) is from 1.1 to 1.3.

3. The battery cell of claim 2, wherein when the positive electrode inner ring (11) and the negative electrode outer ring (23) are facing each other, the ratio of the areic capacity of the negative electrode outer ring (23) to the areic capacity of the positive electrode inner ring (11) is from 1.1 to 1.3.

4. The battery cell of claim 1, wherein when an active material of the positive electrode plate comprises a ternary positive electrode material and an active material of the negative electrode plate comprises a silicon material, and when the positive electrode outer ring (13) and the negative electrode inner ring (21) are facing each other, the ratio of the areic capacity of the negative electrode inner ring (21) to the areic capacity of the positive electrode outer ring (13) is from 1.1 to 1.3.

5. The battery cell of claim 4, wherein when the positive electrode inner ring (11) and the negative electrode outer ring (23) are facing each other, the ratio of the areic capacity of the negative electrode outer ring (23) to the areic capacity of the positive electrode inner ring (11) is from 1.1 to 1.3.

6. The battery cell of claim 1, wherein a ratio of the surface density of the positive electrode outer ring (13) to the surface density of the positive electrode inner ring (11) is K₁=1+2πT/C₁;
wherein, T = thickness of the positive electrode plate + thickness of the negative electrode plate +2 * thickness of the separator, and C₁ is a circumference of a central pin.

7. The battery cell of claim 1 or 6, wherein a ratio of the surface density of the negative electrode outer ring (23) to the surface density of the negative electrode inner ring (21) is K₂=1+2πT/C₁;
wherein, T = thickness of the positive electrode plate + thickness of the negative electrode plate +2 * thickness of the separator, and C₁ is a circumference of a central pin.

8. A battery comprising the battery cell of any one of claims 1-7.

9. An electric device comprising the battery of claim 8.
